Europäisches Patentamt

European Patent Office

Office européen des brevets

(19)

(11) Veröffentlichungsnummer : **0 065 662**
**B1**

(12)

# EUROPÄISCHE PATENTSCHRIFT

(45) Veröffentlichungstag der Patentschrift :
**18.06.86**

(21) Anmeldenummer : **82103606.8**

(22) Anmeldetag : **28.04.82**

(51) Int. Cl.⁴ : **G 07 B 13/08**

(54) **Elektronischer Taxameter.**

(30) Priorität : **19.05.81 DE 3119812**

(43) Veröffentlichungstag der Anmeldung :
**01.12.82 Patentblatt 82/48**

(45) Bekanntmachung des Hinweises auf die Patenterteilung : **18.06.86 Patentblatt 86/25**

(84) Benannte Vertragsstaaten :
**AT DE FR GB IT SE**

(56) Entgegenhaltungen :
**EP-A- 0 000 444**
**WO-A-80 /022 07**
**DE-A- 2 656 848**
**DE-A- 2 822 019**
**DE-B- 2 202 865**
**GB-A- 1 586 557**

(73) Patentinhaber : **Mannesmann Kienzle GmbH**
**Heinrich-Hertz-Strasse**
**D-7730 Villingen-Schwenningen (DE)**

(72) Erfinder : **Schelling, Hugo**
**Haselweg 10**
**D-7730 Villingen-Schwenningen (DE)**
Erfinder : **Adams, Jürgen**
**Am Mühlweiher 1**
**D-7730 Villingen-Schwenningen (DE)**

## Beschreibung

Die Erfindung bezieht sich auf einen elektronischen Taxameter, bestehend aus einem Mikrocomputer, mit welchem aufgrund von eingegebenen Weg- und Zeitimpulsen und den festgeschriebenen Daten aus einem Konstantenspeicher, welche Daten repräsentativ sind für einen Tarif, ein entsprechender Fahrpreis errechenbar und in einem Display anzeigbar ist, und aus einer Einrichtung zum Programmieren des Konstantenspeichers.

Bekanntlich dient ein Taxameter in einem Taxi-Fahrzeug der Berechnung eines Fahrpreises auf der Basis einer erbrachten Fahrleistung. Grundlage zur Errechnung dieses Fahrpreises sind gefahrene Wegstreckenabschnitte und/oder entsprechend abgelaufene Mietzeitabschnitte. Zur Anpassung an die örtlich unterschiedlichen Verhältnisse schließlich werden die Wegstrecken- und Zeitabschnitte mit einem Faktor, dem so bezeichneten Tarif, in einer Recheneinheit multipliziert und in einer Anzeigeeinheit fortlaufend angezeigt. Während einer Fahrt wird durch schrittweise Fortschaltung der Anzeige in der Größenordnung der einmal festgelegten Fahrpreiseinheiten durch Aufsummieren derselben der Gesamtfahrpreis gebildet und angezeigt. Schließlich gibt es in den Gebührenordnungen zur Regelung der Abgeltung von Fahrleistungen eine Grund- oder Anfangsgebühr zur Absicherung einer Mindesteinnahme für eine einmal begonnene Fahrt. Für Leistungen, die über den üblichen Rahmen hinausgehen, ist getrennt von der Berechnung der wegstrecken- und zeitabhängigen Fahrleistung eine Erhebung von sog. Zuschlägen oder Extras vorgesehen, die in der Regel als einmalige Festbeträge in Rechnung gestellt werden und am Ende einer Fahrt den aufsummierten Fahrpreiseinheiten hinzugerechnet werden. Alle Einzelheiten, wie gefahrene Touren, Zuschläge, Fahrpreiseinheiten, Total-Km, Besetzt-Km und dergl., sind für Kontroll- und Wirtschaftlichkeitsrechnungen in getrennten Speichern (RAM) registriert und müssen entsprechend für eine Auswertung in irgendeiner abfragbaren Form stets zur Verfügung stehen.

Im Bereich der elektronischen Taxameter gibt es eine ganze Reihe von Ausführungsformen, die für eine Berechnung von Fahrpreiseinheiten grundsätzlich davon ausgehen, daß einmal für den Ablauf von Mietzeit eine entsprechende Impulsserie erzeugt wird, zum anderen wird gleichzeitig eine die Fahrwegstrecke repräsentierende Impulsfolge erzeugt (DE-A-12 59 129, DE-A-17 74 560, DE-A-21 38 863). Die Impulsserien werden in der Regel entsprechend ihrem Frequenzverhalten bei den bekannten Geräten einem Binäruntersetzer zugeführt, der am Ausgang einen Impuls zur Verfügung stellt, der einem nachfolgenden Hauptzähler zugeführt wird und seinerseits die Fahrpreiseinheiten repräsentiert bzw. zur Anzeige bringt. Die in den Binäruntersetzern eingestellten Teilungsverhältnisse entsprechen dabei der Einstellung eines Tarifes, wie er für den betreffenden Ort festgelegt ist. Hierbei erhebt sich unmittelbar die Frage nach dem Aufwand bei einer evtl. Änderung der einer Fahrpreisberechnung zugrundeliegenden Basis-Tarife. Eine Umstellung der Tarife auf neue Werte würde bei den genannten Geräteausführungen bedeuten, daß eine Änderung der verdrahteten, meist in einer Matrix festgeschriebenen Teilerverhältnisse mit einem aufwendigen Aus- und Einbau des Gerätes einschließlich der geräteintern auszuführenden Arbeiten verbunden ist und so nicht mehr vertretbare Kosten und Ausfallzeiten für eine Einstellung des Taxameters auf einen neuen Tarif verursachen.

In der Erkenntnis dieser Nachteile ist man dazu übergegangen, die im Zusammenhang mit Tarifumstellungen zu verändernden Tarif-Basisdaten in einen austauschbaren, programmierbaren Nur-Lese-Speicher (PROM) einzugeben und so durch den Austausch eines Bauteiles, nämlich des PROMS, eine problemlose und schnelle Umstellung des Taxameters auf neue Tarifdaten möglichst ohne den Ausbau des Gerätes aus dem Fahrzeug zu erzielen (DE-B-22 02 865). Bei der Verwendung eines PROM handelt es sich um einen Baustein, dessen Zellen durch eine nicht umkehrbare Einflußnahme einen entsprechend gewünschten Inhalt annehmen. Das bedeutet aber, bei jeder noch so kleinen Veränderung der Tarifstruktur muß dieser Baustein ausgetauscht und durch einen völlig neuen, auf den geänderten Tarif programmierten Baustein (PROM) ersetzt werden. Auch diese Lösung ist nicht zufriedenstellend, wenn man bedenkt, daß bei einer häufig wechselnden Tarifstruktur, beispielsweise bedingt durch Währungsverfall oder Standortwechsel des Gerätes, jedesmal der Austausch des Tarif-PROM erforderlich ist. Schließlich ist die Herstellung und der Austausch eines neuen Tarifspeichers nur dazu autorisierten Stellen vorbehalten, was immer mit erheblichem Zeit- und Geldverlust verbunden ist.

Eine weitere bekannte Ausführungsform zur Einspeicherung von Tarifdaten gemäß der DE-A-28 22 019 sieht vor, den Rechner des Taxameters mit einem Schreib-Lese-Speicher (RAM) mit geringem Stromverbrauch zu kombinieren, dergestalt daß neue Tarifdaten mittels eines äußeren Organs in Datenflußrichtung über ein logisches System (CPU), das mit dem Schreib-Lese-Speicher verbunden ist, in letzteren die Parameter für einen neuen Tarif einzugeben. Wohl ist bei dieser Art aufgrund der Spezifikation des Schreib-Lese-Speichers wiederholt eine Modifizierung der den Tarif bestimmenden Parameter möglich ; von großem Nachteil bei der bekannten Vorrichtung jedoch ist einmal, daß zur Herbeiführung einer Änderung der Tarifdaten im Tarifspeicher Kapazität des Rechnerprogramms beansprucht wird, zum anderen ist erforderlich, daß der Schreib-Lese-Speicher gemäß der Vorrichtung ständig von einer Batterie über einen zusätzlichen Spannungsregler an eine konstante Speisespannung gelegt ist. Das bedeutet umgekehrt bei einem Spannungseinbruch irgendwelcher Art verliert der Tarifdatenspeicher sein Gedächtnis, d. h. die Tarifdatenbasis zur Bestimmung des Fahrpreises geht verloren.

Durch die Druckschrift DE-A-26 56 848 ist eine Gebührenanzeigevorrichtung bekannt, die eine Verarbeitungsanordnung und eine unter der Steuerung durch die Verarbeitungsanordnung arbeitende Speicheranordnung aufweist zum Speichern einer Information bezüglich einer Gebührenordnung. Die Speicheranordnung für die Gebühreninformationen, die im wesentlichen aus einem Direktzugriffsspeicher (RAM) und einem Zusatzspeicher besteht, ist bei der bekannten Vorrichtung eindeutig in den Steuerungs- und Programmbereich der Zentraleinheit (CPU) und des Festspeichers (ROM) einbezogen, d. h. die Auslösung einer Datenübertragung durch ein externes Tarifdaten-Ladegerät in den Direktzugriffsspeicher (RAM) und den Zusatzspeicher kann ausschließlich über den Taxameter selbst bzw. über die Einschaltung der Zentraleinheit und des Festspeichers erfolgen. Das bedeutet jedoch, daß für die Umstellung des Taxameters auf neue oder geänderte Tarifdaten eine erhebliche Steuer- und Programmkapazität inklusiv Speicherplätze im Festspeicher (ROM), im Direktzugriffsspeicher (RAM) und im Zusatzspeicher des Taxameters allein belegt sind für Tarifladevorgänge.

Es wird weiter auf den in der GB-A-15 86 557 beschriebenen elektronischen Taxameter hingewiesen, der einen elektrisch aufladbaren NUR-Lese-Speicher (EA-ROM) aufweist, in welchen neue Programmdaten einschreibbar sind. Auch bei dieser Taxameterschaltung gelangen die neuen Daten aus einem Programmsteuergerät ausschließlich über eine Beanspruchung der Programmkapazität des Mikroprozessors und des maskenprogrammierten NUR-Lese-Speichers des Taxameters in den für die neuen Tarifdaten bestimmten NUR-Lese-Speicher (EA-ROM) des Taxameters.

Aufgabe der Erfindung ist es, eine Vorrichtung zur wiederholten modifizierbaren Einspeicherung von Tarifdaten in einen elektronischen Taxameter zu finden, mittels der geänderte Tarifdaten zur Bestimmung des Fahrpreises beliebig oft eingebbar und auf beliebig lange Zeit ohne Abhängigkeit von einer Spannungsquelle unverlierbar speicherbar sind.

Eine weitere Aufgabe besteht darin, die Vorrichtung so auszubilden, daß eine Aufbereitung der geänderten Tarifdaten zur Eingabe und das Testen von gespeicherten Tarifdaten durch extern vorgesehene Maßnahmen durchführbar ist.

Die Lösung dieser Aufgabe sieht vor, daß der Mikrocomputer mit einem nichtflüchtigen Schreib-Lese-Speicher (NV-RAM) verbunden ist, derart, daß in den Schreib-Lese-Speicher ohne Beanspruchung von Programmkapazität des Mikrocomputers wiederholt und direkt durch Anschluß eines externen Konstantengebergerätes Tarifdaten für eine geänderte Fahrpreisberechnungsbasis einlesbar sind, daß der nichtflüchtige Schreib-Lese-Speicher ein von einer Stromversorgung unabhängiger Speicher von der Struktur eines MNOS-Speichers (Metall-Nitrit-Oxid-Silizium-Speicher) ist, daß das externe Konstantengebergerät gleichzeitig als Programmier- und Tarifdaten-Testgerät ausgebildet ist und über ein n-poliges Buchsenelement verfügt, über das die Programmierung und eine Tarifdatenprogramm-Testabfrage der nicht sichtbar gespeicherten Daten im Schreib-Lese-Speicher durchführbar ist und daß eine Bereitstellung der Programmierspannung für eine Modifikation im oder eine Testabfragung der Tarifdaten aus dem nichtflüchtigen Schreib-Lese-Speicher durch ein im externen Konstantengebergerät vorgesehenes Netzteil erfolgt.

Weitere Merkmale sind in der nachfolgenden Beschreibung enthalten. Ein Ausführungsbeispiel ist mit Bezugnahme auf die Zeichnungen erläutert. Es zeigt

Figur 1 ein schematisiertes Blockschaltbild eines elektronischen Taxameters in Verbindung mit einem nichtflüchtigen Schreib-Lese-Speicher (NV-RAM) und ein extern anschließbares Konstantengebergerät,

Figur 2 ein schematisiertes Blockschaltbild einer Ausführungsform eines externen Konstantengebergerätes.

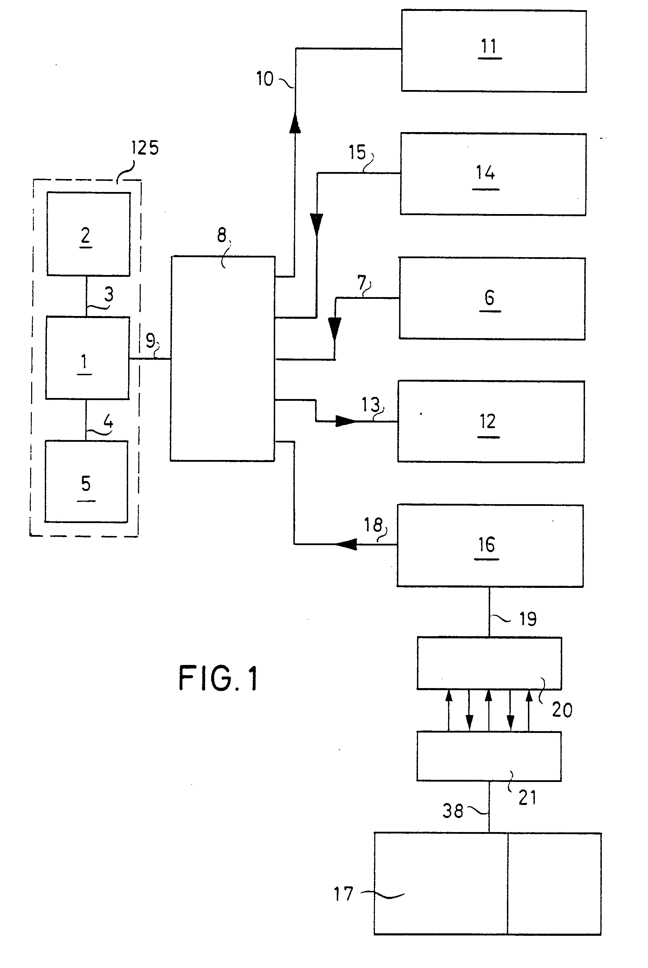

Das Blockschaltbild gemäß Fig. 1 zeigt schematisiert den Aufbau eines Taxameters. Kernstück eines jeden Taxameters ist ein Mikrocomputer 125, in dem dargestellten Ausführungsbeispiel verkörpert durch einen zentralen Mikroprozessor (MPU) 1, der aufgrund von Programmanweisungen unter Eingabe von Parametern bezüglich der Arbeitsweise des Taxi-Fahrzeuges und der gegebenen Tarifordnung Fahrpreiseinheiten ermittelt und diese während des Betriebes, in der Regel durch Aufsummierung, ständig zur Anzeige bringt. Die Arbeitsweise des Mikroprozessors (MPU) 1 wird gesteuert durch einen maskenprogrammierten NUR-Lese-Speicher bzw. ROM 2, der über Leitungen 3 mit dem Mikroprozessor (MPU) 1 verbunden ist. Gleichfalls mit dem MPU 1 über Leitungen 4 verbunden ist ein Zeit-Impuls-Generator bzw. Oszillator 5, der Steuerungszwecken sowie der Bereitstellung von Impulsen zur Berechnung der Wartezeiteinheiten dient. Bekanntlich errechnet sich, wie eingangs erläutert, ein Fahrpreis im wesentlichen aus Wegstrecken- und Zeiteinheiten plus einer sog. Anfangs- oder Grundgebühr. Unter dem Begriff « Wegstreckeneinheit » versteht man eine durch den örtlich festgelegten Tarif bestimmte Fahrwegstrecke, die unmittelbar, nachdem sie durch das Fahrzeug zurückgelegt ist, eine Fortschaltung der Fahrpreisanzeigeeinheit um eine bestimmte Fahrpreiseinheit bewirkt. Um eine möglichst exakte Erfassung der zurückgelegten Wegstrecke zu erzielen, wird beispielsweise von der Tacho-Welle ein Impulsgeber angetrieben, der je durchgefahrene Wegstrecke-einheit eine möglichst hohe Anzahl Impulse liefert. Ein derart arbeitender Wegimpulsgeber 6 ist, wie in Fig. 1 angezeigt ist, über eine Leitung 7, eine Eingabe/Ausgabe-Einheit 8 und eine Leitung 9 mit dem MPU 1 verbunden und speist eine für die gefahrene Wegstrecke repräsentative Anzahl Impulse in den MPU 1 ein. Entsprechend steht zur Umrechnung von Zeiteinheiten in eine Fahrpreiseinheit eine konstante Zeitimpulsfrequenz aus dem Oszillator 5 bereit, um über eine Leitung 4 in den MPU 1 eingegeben zu werden. Dort findet, durch eine Programmanweisung aus dem ROM 2 initiiert, über einen Rechenvorgang entsprechend der jeweiligen Tariffestlegung eine Umwandlung in Fahrpreiseinheiten statt. Schließlich wird gleichfalls durch Programmanweisung aus dem ROM 2 entschieden, welche Teile der beiden Impulszüge aus Wegstreckeneinheiten und Zeiteinheiten zur Bildung der Fahrpreiseinheit herangezogen und zur Auslösung der Fahrpreisfortschaltschritte ausgewertet werden. Hierzu existieren unterschiedliche Auswerteverfahren, wobei einmal durch Auswahl der höheren Frequenz oberhalb einer bestimmten Fahrgeschwindigkeit nur Wegstreckenimpulse in die Fahrpreisberechnung eingehen, darunter entsprechend nur Zeitimpulse, mit der gebräuch-lichen Bezeichnung auch Wartezeitimpulse ge-nannt, zu Fahrpreiseinheiten umgewandelt werden. Bei einem anderen Verfahren wäre bei-spielsweise auch denkbar, aus Wegstrecke-nimpulsen und Zeitimpulsen zusammengefaßt eine Fahrpreisfortschalteinheit zu bilden. Variationen in bezug auf das Rechenverfahren sind technisch in der angezeigten Technologie durchaus fast unbegrenzt möglich. Wartezeit-Impulse, die zur Bildung von Fahrpreiseinheiten herangezogen werden, entstehen aus der im Betriebszustand ständig präsenten Frequenz des Oszillators 5. Um hier eine Abstufung der zeitabhängigen Schaltstufen von hoher Genauigkeit zu erzielen, wird die relativ hohe Frequenz des Oszillators 5 durch Teilerstufen im Verhältnis der Tarife auf die Frequenz der Fahrpreisfortschaltung herabgesetzt. Der MPU 1 ist in bezug auf seine Arbeitsweise bzw. Steuerung grundsätzlich auf das in dem ROM 2 eingespeicherte Programm angewiesen, das auf der Basis der örtlich festgelegten Tarifsbestimmungen einmal erstellt und entsprechend in das ROM 2 eingegeben wird. Aufgrund des gespeicherten Programms im ROM 2 ist der MPU 1 in der Lage, alle möglichen Gebühreneinheiten zu errechnen, evtl. mit festen Grundgebühreneinheiten zusammenzulegen, zu speichern und aufgrund von Ausgangssignalen repräsentativ für Fahrpreiseinheiten über die Leitung 9, die Eingabe/Ausgabe-Einheit 8 und eine Leitung 10 in eine Fahrpreisanzeigeeinheit 11 zu übertragen. Eine Fahrpreisanzeigeeinheit 11 der bezeichneten Art umfaßt mehrere Dekaden einer dezimalen Ziffernanzeige einschließlich der üblichen Decoder- und Treiberstufen.

Um bestimmte Daten, die für einen Gesamtüberblick des Einsatzes eines Taxi-Fahrzeuges, sei es zu Abrechnungszwecken über einen gewissen Zeitraum oder für Wirtschaftlichkeitsbetrachtungen, von Bedeutung sind, stets abrufbereit zur Verfügung zu haben, ist ein Signalspeicher mit jederzeit möglichem, beliebigem Zugriff von der Art eines RAM (Random Access Memory) 12 vorgesehen und über eine Leitung 13 über die Eingabe/Ausgabe-Einheit 8 und die Leitung 9 mit dem MPU 1 verbunden. Das RAM 12 als sog. Schreib-Lese-Speicher erhält in Abhängigkeit der Programmschritte aus dem ROM 2 alle zur Speicherung bestimmten Daten aus dem MPU 1. Es handelt sich hier in der Regel um Kontrollzähler-Daten, die eine Aussage liefern über beispielsweise gefahrene Gesamt-Km, Besetzt-Km. Touren, Fahrpreiseinheiten, Extra, Gebühren usw. Die Inhalte des RAM 12 sind jederzeit über eine in einem Bedienteil, einem so bezeichneten Tastenfeld 14, vorgesehene bestimmte Taste oder Tastenkombination auslösbar und programmgesteuert in die Anzeigeeinheit 11 übertragbar. Die Daten des RAM 12 bleiben je nach Auswahl der Programm-Adresse im ROM 2 im RAM 12 erhalten oder sind durch entsprechende Steuerung löschbar. Entsprechend steht das Tastenfeld 14 über eine Leitung 15, die Eingabe/Ausgabe-Einheit 8 und die Leitung 9 mit dem MPU 1 in Verbindung. Dies dient neben einer Eingabe von Steuerungsanweisungen nicht zuletzt auch der Eingabe von zusätzlichen Daten in den MPU 1, wie beispielsweise eine Berechnungsanweisung für Extras aufgrund eines speziellen Mietvorgangs.

Um schließlich dem Taxameter der bis dahin erklärten Art eine von allen übrigen Funktionen möglichst unabhängige Basis für eine Berechnung von Fahrpreiseinheiten zu geben, ist der MPU 1 über die Leitung 9, die Eingabe/Ausgabe-Einheit 8 und eine Leitung 18 mit einem nichtflüchtigen Schreib-Lese-Speicher (NV-RAM) 16 verbunden, derart daß in den Schreib-Lese-Speicher 16 ohne Beanspruchung von Programmkapazität des MPU 1 wiederholt und direkt durch Anschluß eines externen Konstantengebergerätes 17 Tarifdaten für eine geänderte Fahrpreisberechnungsbasis einlesbar sind. d. h. in vereinfachter Ausdrucksweise : aufgrund der durch Fahrwegstrecken und/oder Mietzeiteinheiten festgestellten Leistungen in Form von zählbaren Impulsserien ist über eine mathematische Operation, beispielsweise durch Impulsuntersetzung über einen durch den gewählten Tarif bestimmten Teiler (Divisor) die aktuelle Fahrpreiseinheit zu ermitteln. Diese Teiler beispielsweise gelten bei den Taxametern als variable Parameter und werden als Veränderliche durch das örtlich festgelegte Tarifgefüge bestimmt. Diese Variablen müssen als so bezeichnete Tarifdaten dem Mikrocomputer 125 bzw. MPU 1 zur Verfügung gestellt werden. Ausschließlich auf der Basis der aus dem Schreib-Lese-Speicher 16 auslesbaren Tarifdaten sind Rechenoperationen im MPU 1 zur Bildung der Fahrprei-seinheiten möglich. Entsprechend der Bedeu-tung der Tarifdaten ist als Speicher ein nichtflüchtiger Schreib-Lese-Speicher (NV-RAM) 16 vorgesehen, der unabhängig von einer Steuerung über den MPU 1 durch geeignete Maßnahmen auf beispielsweise geänderte Tarifdaten einstellbar ist. Aufgrund der Struktur des Speichers als MNOS-Speicher (Metall-Nitrid-Oxid-Semiconductor) braucht der Schreib-Lese-Speicher 16 für die Beibehaltung der Tarifdaten keinerlei Stützspannung, d. h. auch bei Ausfall der Spannungsquelle des Taxameters über längere Zeit verliert der Schreib-Lese-Speicher 16 nicht das Tarifprogramm und ist unmittelbar bei wieder angelegter Spannung an das Gerät funktionsbereit. Der Datenfluß zur Einspeicherung neuer oder geänderter Tarifdaten kann direkt durch ein externes Konstantengebergerät 17, also ohne eine Beanspruchung von Programmkapazität des MPU 1 erfolgen. Das bedeutet weiter eine Bereitstellung von Programmierspannung seitens des Taxametergerätes ist dazu gleichfalls nicht erforderlich.

Zur Schaffung einer Verbindung zu einem externen Konstantengebergerät 17 ist ausgehend vom Schreib-Lese-Speicher 16 eine separate Peripherieanschlußleitung 19 mit Buchsenelementen 20 vorgesehen, über welche ein Anschluß an das mit entsprechend angepaßten Steckerelementen 21 ausgerüstete externe Konstantengebergerät 17 herstellbar ist. Über diese Verbindung schließlich sind durch Auswahl geeigneter Adressensignale bis dahin gespeicherte Tarifdaten löschbar bzw. neue Tarifdaten einschreibbar.

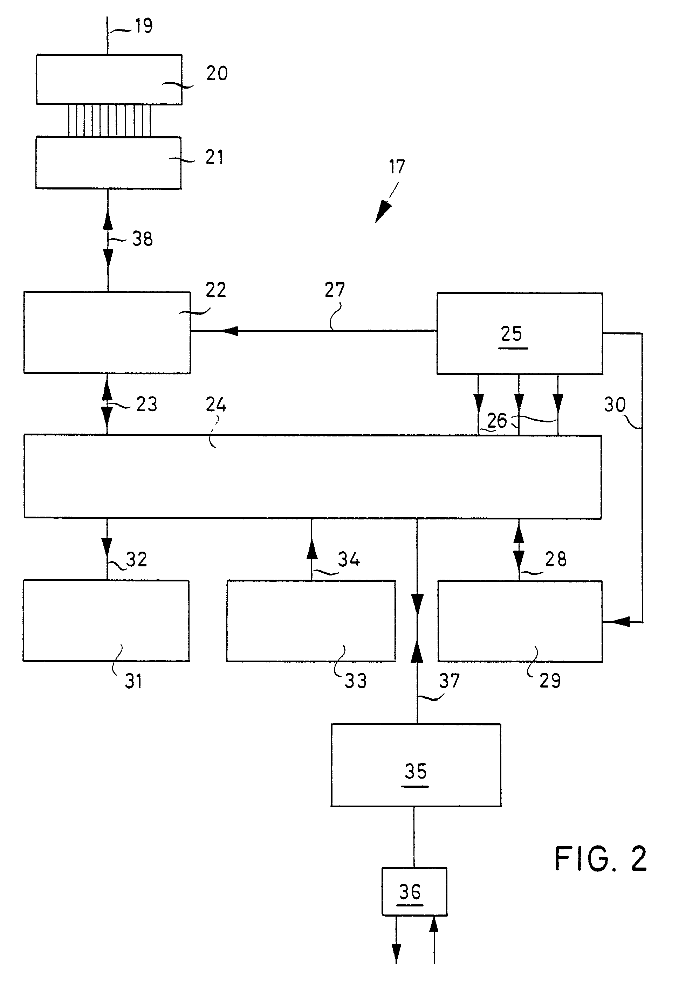

Gemäß Fig. 2 ist ein schematisiertes Blockschaltbild eines externen Konstantengebergerätes 17 gezeigt. Von den mit dem Taxameter gemäß Fig. 1 verbindbaren Steckerelementen 21 des Konstantengebergerätes 17 führt die Leitung 38 über einen Schnittstellen-Puffer 22 und eine weitere Leitung 23 in eine Mikrocomputer-Einheit (MPU) 24 des Konstantengebergerätes 17. Der Schnittstellen-Puffer 22 dient der simultanen Verarbeitung der Ein- und Ausgabedaten. Der Mikrocomputer 24 setzt sich im wesentlichen aus einer CPU, einer Input-Output-Einheit, einem ROM, einem RAM und einem Impulsgenerator zusammen. Ein Netzteil 25 zur Versorgung des Konstantengebergerätes 17 über dazu vorgesehene Leitungen 26 dient zusätzlich der Bereitstellung einer Programmierspannung und ist entsprechend als Programmierspannungsgeber ausgebildet und über eine Leitung 27 mit dem Schnittstellenpuffer 22 zur programmierten Einschreibung oder Löschung von Daten in den nichtflüchtigen Schreib-Lese-Speicher 16 des Taxametergerätes verbunden. Gleichzeitig dient der Programmierspannungsgeber des Netzteiles 25 über eine Leitung 30 aber auch der Versorgung eines im Konstantengebergerät 17 mit dem Mikrocomputer 24 über Leitung 28 zusammengeschalteten Schreib-Lese-Speicher 29, der die Funktion eines nichtflüchtigen Datenzwischenspeichers hat. Zum Beschreiben und Löschen (wortweise oder gesamt) eines nichtflüchtigem Schreib-Lese-Speichers sind Programmierspannungen, gemeint sind damit die Betriebsspannungen in der Zeit der Programmierung oder Löschung des Schreib-Lese-Speichers, in der Größenordnung von ± 12 V bis ± 25 V notwendig, die sehr stark von den üblichen Systembetriebsspannungen abweichen. Da die bezeichneten Spannungen in dieser Größenordnung nur bei Datenänderungen im nichtflüchtigen Schreib-Lese-Speicher 16 gebraucht werden, müssen sie nicht durch das Netzteil des Taxametergerätes permanent zur Verfügung gestellt werden. Das Netzteil des Taxameters kann somit durch den Wegfall eines Wandlers zur Erzeugung der Programmierspannungen wesentlich vereinfacht ausgelegt sein. Dieser Vorteil erscheint umso erheblicher, wenn man bedenkt, daß sich die Maßnahme des Verzichts auf einen Programmierspannungswandler auf jedes einzelne Taxametergerät erstreckt und damit kostenmäßig und in bezug auf Fehlerquellen nur günstige Auswirkungen zeigt. Die Programmierspannung steht immer im Zusammenhang mit dem Gebrauch des Konstantengebergerätes 17 zur Verfügung und kann als Erweiterung des Netzteiles 25 zu letzterem mit wenig Aufwand bereitgestellt werden.

In einer vorteilhaften Ausbildungsform ist im externen Konstantengebergerät 17 ein alphanumerisches Zeilendisplay 31 vorgesehen und wird über Leitung 32 vom Mikrocomputer 24 gesteuert. Bei einer Tarifdatenmodifikation wird das bisherige Tarifprogramm oft nur zu einem kleinen Teil geändert, d. h. die meisten Daten im nichtflüchtigen Schreib-Lese-Speicher 16 bleiben erhalten. Die nicht neu eingegebenen Daten sind aber im nichtflüchtigen Schreib-Lese-Speicher 16 nicht sichtbar gespeichert. Insbesondere diese im nichtflüchtigen Schreib-Lese-Speicher 16 verbleibenden Daten können durch Aufruf auf dem Zeilendisplay 31 des Konstantengebergerätes 17 angezeigt werden und sind somit leicht überprüfbar.

Auch die Vorgänge einer Konstantenumrechnung sind durch das Konstantengebergerät 17 überprüfbar. Daten, die beispielsweise zur Errechnung von weg- und zeitbedingten Fortschaltungen herangezogen werden und als die so bezeichneten Konstanten erklärt sind oder Daten zur Ablaufsteuerung (wie Bedientastenzuordnung, Zuschaltbarkeit von Taxstufen, Kontrollzähleraufrufsperren usw.) sind in verschlüsselter (binärer) Form im nichtflüchtigen Schreib-Lese-Speicher 16 bzw. 29, vor allem wegen einer einfachen Bearbeitung durch das System (Taxameter) und aus Platzgründen, abgespeichert.

Das bedeutet, ein derartiges Speicherformat bedarf einer Codierung bzw. Decodierung der Inhalte für eine Kontrolle durch den Bediener des Konstantengebergerätes 17. Über den Vorgang der Codierung bei einer derartigen Anordnung jedoch ist in vorteilhafter Weise eine Bereitstellung und Programmierung der oben angezeigten Daten in einer kompakten und damit speicherplatzsparenden Form möglich. Darüber hinaus sind die Steuerdaten bei der Eingabe durch Klartext im Zeilendisplay 31 identifizierbar.

Auch beim Vorgang der Decodierung sind bei einer Kontrolle der Daten die Informationen wieder im Klartext anzeigbar.

Zur manuellen Eingabe von neuen oder geänderten Daten in das Konstantengebergerät 17 ist eine über eine Dateneingabeleitung 34 mit dem Mikrokomputer 24 verbundene Tastatur 33 vorgesehen. Alle über die Tastatur 33 eingegebenen Informationen werden zunächst zwischengespeichert und sind durch eine Anzeige im Zeilendisplay 31 kontrollierbar. Die Eingabe neuer Daten erfolgt schrittweise je nach Aufgabe, z. B. der Änderung von Einzeldaten oder der Gesamtdaten oder der Kontrolle usw., mit unterschiedlichem Ablauf. So ist z. B. auch eine Kausalprüfung durchführbar, da Daten innerhalb eines Tarifes in einer gewissen Abhängigkeit zueinander stehen. Es kann damit überprüft werden, ob eine lange Fortschaltwegstrecke mit einer fraglich kurzen Fortschaltzeit verknüpft ist. Es muß mit dem Konstantengebergerät 17 in der Aufgabe eines Testgerätes auch möglich sein, die Vollständigkeit oder eine fehlerhafte Programmeingabe im Sinne der einwandfreien Verarbeitbarkeit durch das System des Taxameters zu kontrollieren und anzuzeigen. Da jede Fehleingabe oder Falschbedienung im Zeilendisplay 31 in entschlüsselter Darstellung angezeigt wird, ist jeder Fehler unmittelbar erkennbar und durch eine rechtzeitige Korrektur im Konstantengebergerät 17 und vor einer Übertragung in das Taxametergerät zu beseitigen.

Schließlich ist im Konstantengebergerät 17 über eine Leitung 37 mit dem Mikrocomputer 24 verbunden eine HOST-Computer-Schnittstelle 35 vorgesehen, über die mittels steckbarem Anschluß 36 an eine externe Daten-Aufbereitungsanlage bereits durch einen Rechner erstellte Tarifdaten in das Konstantengebergerät 17 geladen werden. Diese Art der Programmierung des Konstantengebergerätes 17 ist von besonderem Vorteil bei Änderungen größeren Ausmaßes oder bei einem Zurückgreifen auf andere bereits vorhandene Tarifdaten, weil sich durch ein derartiges Verfahren die Datenerstellung auf dem Konstantengebergerät 17 wesentlich verkürzt.

**Patentansprüche**

1. Elektronischer Taxameter, bestehend aus einem Mikrocomputer (125), mit welchem aufgrund von eingegebenen Weg- und Zeitimpulsen und den festgeschriebenen Daten aus einem Konstantenspeicher (2), welche Daten repräsentativ sind für einen Tarif, ein entsprechender Fahrpreis errechenbar und in einem Display (11) anzeigbar ist, und aus einer Einrichtung zum Programmieren des Konstantenspeichers (2), dadurch gekennzeichnet, daß der Mikrocomputer (125) mit einem nichtflüchtigen Schreib-Lese-Speicher (NV-RAM) (16) verbunden ist, derart, daß in den Schreib-Lese-Speicher (16) ohne Beanspruchung von Programmkapazität des Mikrocomputers (125) wiederholt und direkt durch Anschluß eines externen Konstantengebergerätes (17) Tarifdaten für eine geänderte Fahrpreisberechnungsbasis einlesbar sind, daß der nichtflüchtige Schreib-Lese-Speicher (16) ein von einer Stromversorgung unabhängiger Speicher von der Struktur eines MNOS-Speichers (Metall-Nitrit-Oxid-Silizium-Speicher) ist, daß das externe Konstantengebergerät (17) gleichzeitig als Programmier- und Tarifdaten-Testgerät ausgebildet ist und über ein n-poliges Buchsenelement (20) verfügt, über das die Programmierung und eine Tarifdatenprogramm-Testabfrage der nicht sichtbar gespeicherten Daten im Schreib-Lese-Speicher (16) durchführbar ist und daß eine Bereitstellung der Programmierspannung für eine Modifikation im oder eine Testabfragung der Tarifdaten aus dem nichtflüchtigen Schreib-Lese-Speicher (16) durch ein im externen Konstantengebergerät (17) vorgesehenes Netzteil (25) erfolgt.

2. Elektronischer Taxameter nach Anspruch 1, dadurch gekennzeichnet, daß der nichtflüchtige Schreib-Lese-Speicher (NV-RAM) (16) neben der internen Verbindung zu einem Mikroprozessor (1) als Teil des Mikrocomputers (125) aufgrund einer separaten Peripherie-Anschlußleitung (19) über einem durch Buchsenelemente (20) verbindbaren Anschluß an das externe Konstantengebergerät (17) verfügt, über das durch geeignete Adressensignale bis dahin gespeicherte Tarifdaten löschbar bzw. neue Tarifdaten einlesbar sind.

3. Elektronischer Taxameter nach Anspruch 1, dadurch gekennzeichnet, daß das externe Konstantengebergerät (17) ein alphanumerisches Zeilendisplay (31) aufweist, in welchem nicht sichtbar gespeicherte Tarifdaten im Schreib-Lese-Speicher (16) des Taxameters durch eine Aufrufadresse aus dem Konstantengebergerät (17) im Zeilendisplay (31) anzeigbar sind.

4. Elektronischer Taxameter nach Anspruch 1, dadurch gekennzeichnet, daß zur manuellen Eingabe von neuen oder geänderten Tarifdaten in das Konstantengebergerät (17) eine über eine Dateneingabeleitung (34) mit einem Mikrocomputer (24) verbundene Tastatur (33) vorgesehen ist, mittels welcher die Tarifdaten über die Kontrolle durch das Zeilendisplay (31) vorbereitet werden und eine Übertragung in den Schreib-Lese-Speicher (16) des Taxameters ansteuerbar ist.

5. Elektronischer Taxameter nach Anspruch 3, dadurch gekennzeichnet, daß das Konstantengebergerät (17) eine Host-Computerschnittstelle (35) aufweist, über die mittels eines steckbaren Anschlusses (36) das Konstantengebergerät (17) mit den für den Schreib-Lese-Speicher (16) des Taxameters bestimmten Tarifdaten aufladbar ist.

**Claims**

1. Electronic taximeter comprising a microcomputer (125) by means of which based on distance and time pulses put in and based on the fixed data from a constant store (2), which data are representative of a tariff, a corresponding fare may be calculated and indicated by means of a display (11) and comprising a device for programming the constant store (2) characterized in that the microcomputer (125) is connected to a non-volatile read and write store (NV-RAM 16) in such manner that into the read and write store (16) — without claiming any programming capacity of the microcomputer (125) — tariff data for a modified fare computing basis may be fed repeatedly and directly by connecting an external constant generator device (17), and in that the non-volatile read and write store (16) is a store independent of a current supply of the structure of an MNOS-store (metal-nitrite-oxide-silicium store) in that the external constant generator device (17) is simultaneously made in the form of a programming and tariff data testing device having an n-pole socket device (20) by means of which a programming and a tariff data programming test routine of the invisibly stored data in the read and write store (16) may be carried through and in that the programming voltage for a modification in or a test routine of the tariff data from the non-volatile read and write store (16) is effected by a power supply (25) provided for in the external constant generator device (17).

2. Electronic taximeter according to Claim 1, characterized in that the non volatile read and write store (NV-RAM 16) besides the internal connection to the microprocessor (1) as part of the microcomputer (125) due to a separate peripheral connecting line (19) may be connected to the external constant generator device (17) by means of a socket element (20) so that by suitable address signals so far stored tariff data may be deleted and new tariff data loaded.

3. Electronic taximeter according to Claim 1, characterized in that the external constant generator device (17) has an alphanumeric line display (31) in which invisibly stored tariff data from the read and write store (16) of the taximeter may be indicated by means of a calling up address from the constant generator device (17).

4. Electronic taximeter according to Claim 1, characterized in that for a manual input of new or modified tariff data into the constant generator device (17) a keyboard (33) is provided which is connected to a microcomputer (24) via a data input line (34) by means of which keyboard (33) the tariff data under supervision of the line display device (31) may be prepared, so that a transfer to the read and write store (16) of the taximeter is possible.

5. Electronic taximeter according to Claim 3, characterized in that the constant generator device (17) has a host computer interface (35) by means of which the constant generator device (17) by means of a pluggable connection (36) may be loaded with the tariff data determined for the read and write store (16) of the taximeter.

### Revendications

1. Taximètre électronique constitué, d'une part, d'un micro-ordinateur (125) qui permet, en raison d'impulsions de parcours et de temps injectées et des données définitivement inscrites provenant d'une mémoire de constantes (2), lesquelles données étant représentatives pour un tarif, de calculer un prix de course correspondant et de l'afficher dans un afficheur (11) et, d'autre part, d'un dispositif pour la programmation de la mémoire de constantes (2), caractérisé par le fait que le micro-ordinateur (125) est relié à une mémoire à lecture et écriture non volatile (NV-RAM) (16) de telle sorte que, sans faire appel à la capacité de programme du micro-ordinateur (125), des données tarifaires pour une base de calcul du prix de la course modifiée puissent être inscrites, directement et de façon répétée, dans la mémoire à lecture et écriture (16) par le raccordement d'un transmetteur de constantes externe (17), que la mémoire à lecture et écriture non volatile (16) est une mémoire indépendante de l'alimentation en courant, de la structure d'une mémoire MNOS (Metal Nitride Oxide Silicium), que le transmetteur de constantes externe (17) est réalisé simultanément comme testeur de données de programmation et de tarif et qu'il dispose d'un élément connecteur femelle de n pôles (20) permettant d'effectuer la programmation et une interrogation d'essai de programme de données tarifaires des données, mémorisées d'une manière non visible dans la mémoire à lecture et écriture (16) et qu'une mise à disposition de la tension de programmation pour une modification dans la mémoire à lecture et écriture non volatile (16) òu une interrogation d'essai des données tarifaires en provenance de cette dernière est effectuée par un bloc d'alimentation secteur (25) prévu dans le transmetteur de constantes externe (17).

2. Taximètre électronique selon la revendication 1, caractérisé par le fait que la mémoire à lecture et écriture non volatile (NV-RAM) (16) dispose, en plus de la liaison interne à destination d'un microprocesseur (1) en tant que partie du micro-ordinateur (125), en raison d'une ligne de liaison périphérique séparée (19), d'une connexion pouvant être reliée, par l'intermédiaire d'éléments connecteurs femelles (20), au transmetteur de constantes externe (17) par l'intermédiaire duquel il est possible, par des signaux d'adresse appropriés, d'effacer des données tarifaires mémorisées jusque-là ou de mémoriser de nouvelles données tarifaires.

3. Taximètre électronique selon la revendication 1, caractérisé par le fait que le transmetteur de constantes (17) présente un afficheur de lignes (31) dans lequel des données tarifaires mémorisées, de manière non visible, dans la mémoire à lecture et écriture (16) du taximètre peuvent être extraites par une adresse d'appel du transmetteur de constantes (17) et affichées dans l'afficheur de lignes (31).

4. Taximètre électronique selon la revendication 1, caractérisé par le fait que, pour l'entrée manuelle de données tarifaires nouvelles ou modifiées dans le transmetteur de constantes (17) est prévu un clavier (33) relié, par l'intermédiaire d'une ligne d'entrée de données (34) à un micro-ordinateur (24), lequel clavier permet de préparer les données tarifaires par l'intermédiaire du contrôle par l'afficheur de lignes (31) et de sélectionner un transfert dans la mémoire à lecture et écriture (16) du taximètre.

5. Taximètre électronique selon la revendication 3, caractérisé par le fait que le transmetteur de constantes (17) présente une interface d'ordinateur principal (35) par l'intermédiaire de laquelle il est possible de charger, au moyen d'un connecteur (36), le transmetteur de constantes (17) avec les données tarifaires destinées à la mémoire à lecture et écriture (16) du taximètre.

FIG.1

FIG. 2